# EUROPEAN PATENT APPLICATION

(11) **EP 4 507 362 A1**
(43) Date of publication of application: **12.02.2025**
(21) Application number: 22936215.7
(22) Date of filing: 08.04.2022
(51) Int. Cl.: H04W 24/02, H04B 17/309

(54) **THRESHOLD DETERMINATION METHOD/APPARATUS/DEVICE, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN); HU, Ziquan, Beijing 100085 (CN)
(74) Representative: Gunzelmann, Rainer
(86) International application number: PCT/CN2022/085975
(87) International publication number: WO 2023/193278

(57) **Abstract**

The present disclosure relates to the technical field of communications, and provides a threshold determination method/apparatus/device/storage medium. A UE determines a numerical value corresponding to the UE (101b); a parameter threshold corresponding to the UE is determined on the basis of the numerical value (102b); and a corresponding operation is performed on the basis of the magnitude relationship between a first measurement value corresponding to a reference signal and the parameter threshold (103b). Hence, in the method provided by the present disclosure, the occurrence of the situation that "a UE with a large measurement error should have performed an operation, such as initiating a retransmission, but on the basis of a configured parameter threshold, it is determined that the UE does not need to perform the operation, i.e., no retransmission needs to be initiated" is avoided, thereby ensuring the signal coverage performance of the UE.

## Description

### TECHNICAL FIELD

The disclosure relates to the field of communication technologies, and in particular, to a threshold determination method/apparatus/device and storage medium.

### BACKGROUND

In Release 17, a RSRP (Reference Signal Receiving Power) threshold will be configured for the User Equipment (UE), so that when the RSRP of the SSB (Synchronization Signal and PBCH block) measured by the UE is less than the RSRP threshold of the UE, MSG3 repetition will be initiated to improve the coverage performance of MSG3. In related technologies, the same RSRP threshold will be configured for all UEs, where the RSRP threshold is the one that matches the UE with the high antenna configuration.

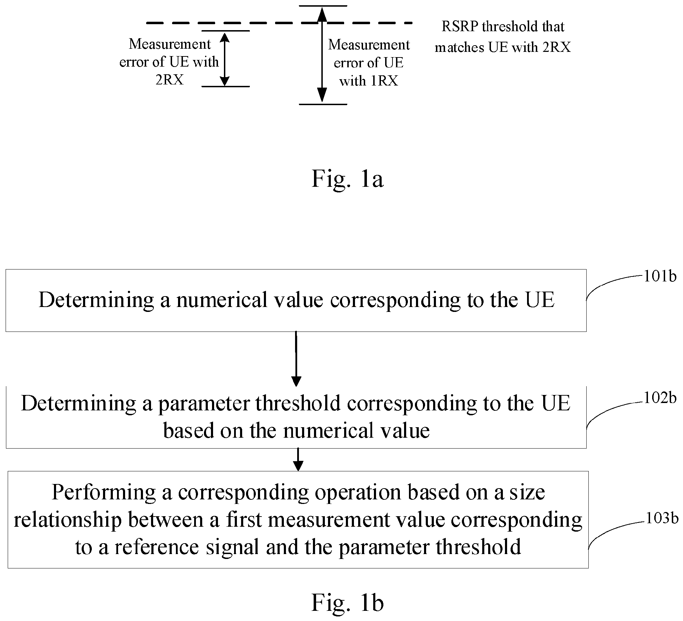

However, in related technologies, the antenna configuration corresponding to different UEs may vary, which may result in different measurement errors for the UEs. If the same RSRP threshold is configured for all UEs, there will be a situation where UEs with large measurement errors should initiate retransmission, but based on the configured RSRP threshold, it is determined that retransmission is not necessary. Specifically, Fig. 1a is a schematic diagram of measurement errors corresponding to a UE with different antenna configurations provided in an embodiment of the present disclosure. As shown in Fig. 1a, the measurement error of the UE with the antenna configuration of 2RX (i.e., the UE with the high antenna configuration) is smaller, while the measurement error of the UE with the antenna configuration of 1RX (i.e., the UE with the low antenna configuration) is larger. Based on this, when the UE with 2RX and the UE with 1RX are at the same position in the cell, the RSRP measured by the UE with 2RX may be smaller than that measured by the UE with 1RX. At this time, if the same RSRP threshold is configured for the UE with 2RX and the UE with 1RX, the situation of "the RSRP of SSB measured by the UE with 2RX is less than the RSRP threshold, while the RSRP of SSB measured by the UE with 1RX is greater than the RSRP threshold " will appear, and it will be determined that the UE with 2RX initiates retransmission, while the UE with 1RX does not initiate retransmission. However, actually, the UE with 2RX and the UE with 1RX are located at the same position in the cell and have the same coverage level. That is, if the UE with 2RX needs to initiate retransmission, the UE with 1RX should also initiate retransmission.

Based on the above content, it can be seen that if the RSRP threshold determination method in related technologies is used, for the UE with 1RX (i.e. UE with large measurement error), there will be a situation where "retransmission should have been initiated, but it is determined based on the configured RSRP threshold that no retransmission is needed", which will affect the signal coverage performance of UE with large measurement error.

### SUMMARY

The threshold determination method/device/apparatus and storage medium proposed in this disclosure are used to determine the corresponding threshold for Redcap UEs with different antenna configurations, in order to solve the technical problem of "how Redcap UEs with different antenna configurations determine whether to initiate MSG3 retransmission requests based on measurement results".

Embodiments of an aspect of the present disclosure provide a method. The method is applied to a UE, and includes:
determining a numerical value corresponding to the UE;
determining a parameter threshold of the UE based on the numerical value; and
performing a corresponding operation based on a size relationship between a first measurement value corresponding to a reference signal and the parameter threshold.

Embodiments of another aspect of the present disclosure provide a method. The method is applied to a network device, and includes:
configuring a numerical value corresponding to each UE with a distinct antenna configuration, in which the numerical value is used to determine a parameter threshold of the UE.

Embodiments of yet another aspect of the present disclosure provide a threshold determination apparatus. The apparatus includes:
a first determining module, configured to determine a numerical value corresponding to the UE;
a second determining module, configured to determine a parameter threshold of the UE based on the numerical value; and
a processing module, configured to perform a corresponding operation based on a size relationship between a first measurement value corresponding to a reference signal and the parameter threshold.

Embodiments of yet another aspect of the present disclosure provide a threshold determination apparatus. The apparatus includes:
a configuring module, configured to configure a numerical value corresponding to each UE with a distinct antenna configuration, in which the numerical value is used to determine a parameter threshold of the UE.

Embodiments of yet another aspect of the present disclosure provide a communication device. The communication device includes a processor and a memory. The memory is stored with a computer program. The processor is configured to execute the computer program stored in the memory, so as to cause the device to implement the method provided in the embodiments of an aspect.

Embodiments of yet another aspect of the present disclosure provide a communication device. The communication device includes a processor and a memory. The memory is stored with a computer program. The processor is configured to execute the computer program stored in the memory, so as to cause the device to implement the method provided in the embodiments of another aspect.

Embodiments of yet another aspect of the present disclosure provide a communication device, including a processor and an interface circuit;
the interface circuit is configured to receive code instructions and transmit the code instructions to the processor;
the processor is configured to run the code instructions to implement the method provide in the embodiments of an aspect.

Embodiments of yet another aspect of the present disclosure provide a communication device, including a processor and an interface circuit;
the interface circuit is configured to receive code instructions and transmit the code instructions to the processor;
the processor is configured to run the code instructions to implement the method provide in the embodiments of another aspect.

Embodiments of yet another aspect of the present disclosure provide a computer readable storage medium, configured to store instructions, in which when the instructions are executed, the method provided in the embodiments of an aspect is implemented.

Embodiments of yet another aspect of the present disclosure provide a computer readable storage medium, configured to store instructions, in which when the instructions are executed, the method provided in the embodiments of another aspect is implemented.

In summary, in the threshold determination method/device/apparatus and storage medium provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1a is a schematic diagram of measurement errors corresponding to a UE with different antenna configurations provided in an embodiment of the present disclosure.
Fig. 1b is a schematic flowchart of a threshold determination method provided in an embodiment of the present disclosure.
Fig. 2 is a schematic flowchart of a threshold determination method provided in another embodiment of the present disclosure.
Fig. 3 is a schematic flowchart of a threshold determination method provided in yet another embodiment of the present disclosure.
Fig. 4a is a schematic flowchart of a threshold determination method provide in still yet another embodiment of the present disclosure.
Fig. 4b is a schematic diagram of parameter thresholds determined by a UE provided in an embodiment of the present disclosure.
Fig. 5 is a schematic flowchart of a threshold determination method provided in still yet another embodiment of the present disclosure.
Fig. 6a is a schematic flowchart of a threshold determination method provided in still yet another embodiment of the present disclosure.
Fig. 6b is a schematic diagram of a determined second measurement value corresponding to a UE provided in an embodiment of the present disclosure.
Fig. 6c is a schematic flowchart of a threshold determination method provided in still yet another embodiment of the present disclosure.
Fig. 7 is a schematic flowchart of a threshold determination method provided in another embodiment of the present disclosure.
Fig. 8 is a schematic flowchart of a threshold determination method provided in yet another embodiment of the present disclosure.
Fig. 9 is a schematic flowchart of a threshold determination method provided in still yet another embodiment of the present disclosure.
Fig. 10 is a schematic flowchart of a threshold determination method provided in still yet another embodiment of the present disclosure.
Fig. 11 is a schematic flowchart of a threshold determination method provided in still yet another embodiment of the present disclosure.
Fig. 12 is a block diagram of a threshold determination apparatus provided in an embodiment of the present disclosure.
Fig. 13 is a block diagram of a threshold determination apparatus provided in another embodiment of the present disclosure.
Fig. 14 is a block diagram of a user equipment provided in an embodiment of the present disclosure.
Fig. 15 is a block diagram of a network device provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of embodiments of the present disclosure as described in the accompanying claims.

The terms used in this disclosure are for the sole purpose of describing specific embodiments and are not intended to limit this disclosure. The singular forms "a", "the" and "said" used in this disclosure and the accompanying claims are also intended to include the plural form, unless the context clearly indicates otherwise. It should also be understood that the term "and/or" used in this article refers to and includes any or all possible combinations of at least one associated listed item.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when...... " or "in case that... ... " or "in response to determine ...... ".

The threshold determination method/apparatus/device and storage medium provided in embodiments of the present disclosure will be described in detail with reference to the accompanying drawings.

Fig. 1b is a schematic flowchart of a threshold determination method provided in an embodiment of the present disclosure. The method is performed by UE, and as shown in Fig. 1b, the threshold determination method may include following steps.

In step 101b, a numerical value corresponding to the UE is determined.

In an embodiment of the present disclosure, UE may refer to a device that provides voice and/or data connectivity to users. The terminal device can communicate with one or more core networks via RAN (Radio Access Network), and UE may be an IoT terminal such as a sensor device, a mobile phone (also known as "cellular" phone), and a computer with IoT terminal, such as fixed, portable, pocket sized, handheld, computer built-in, or vehicle mounted device, for example, a station (STA), a subscriber unit, a subscriber station, a mobile station, a mobile station, a remote station, an access point, a remote terminal, an access terminal, a user terminal, or a user agent. Alternatively, UE may also be a device for unmanned aerial vehicles. Alternatively, UE may also be a vehicle mounted device, such as a wireless communication enabled onboard computer or a wireless terminal connected to an external onboard computer. Alternatively, the UE may also be a roadside device, such as a street light, signal light, or other roadside device with wireless communication capabilities.

In an embodiment of the present disclosure, this numerical value can be used to determine the parameter threshold corresponding to the UE, which can be used to evaluate the signal quality of the reference signal, so that corresponding operations can be performed based on the signal quality of the reference signal in the future.

In an embodiment of the present disclosure, the operating frequency range supported by the UE may vary, and the antenna configuration corresponding to different frequency ranges may also differ.

Specifically, in an embodiment of the present disclosure, the operating frequency range supported by the UE may be FR1, and under FR1, the antenna configuration of the UE may be either the first antenna configuration or the second antenna configuration. In an embodiment of the present disclosure, under FR1, the number of antennas corresponding to the first antenna configuration is less than the number of antennas corresponding to the second antenna configuration. For example, in an embodiment of the present disclosure, under FR1, the first antenna configuration may be: 1 RX (receive) antenna, and the second antenna configuration may be: 2 RX antennas.

In another embodiment of the present disclosure, the operating frequency range supported by the UE may be FR2, and under FR2, the antenna configuration of the UE may also be the first antenna configuration or the second antenna configuration. In an embodiment of the present disclosure, under FR2, the number of antenna elements corresponding to the first antenna configuration is less than the number of antenna elements corresponding the second antenna configuration. For example, in an embodiment of the present disclosure, the first antenna configuration under FR2 is 2 RX w/. element reduction (i.e. 2 receiving antennas with reduced antenna elements), the second antenna configuration of the UE under FR2 may be 2 RX w/o element reduction (i.e. 2 receiving antennas without reduced antenna elements).

In an embodiment of the present disclosure, the UE with the first antenna configuration (1RX) under FR1 may be a Redcap UE (Reduced Capability User Equipment), and the UE with the second antenna configuration (2RX) under FR1 may be a Redcap UE and/or non-Redcap UE. Moreover, in an embodiment of the present disclosure, the UE with the first antenna configuration (2 RX w/. element reduction) under FR2 may be a Redcap UE, and the UE with the second antenna configuration (2 RX w/o element reduction) under FR2 may be a non-Redcap UE.

In step 102b, a parameter threshold corresponding to the UE is determined based on the numerical value.

In step 103b, a corresponding operation is performed based on a size relationship between a first measurement value corresponding to a reference signal and the parameter threshold.

In an embodiment of the present disclosure, the first measurement value mentioned above is essentially the measurement value obtained by the UE during actual measurement of the reference signal. And, specifically, in an embodiment of the present disclosure, if the first measurement value of the reference signal is less than the parameter threshold, it indicates that the signal quality of the reference signal is poor, and the operation corresponding to the situation of "poor signal quality" can be performed (such as initiating retransmission); if the first measurement value of the reference signal is greater than or equal to the parameter threshold, it indicates that the signal quality of the reference signal is good, and the operation corresponding to the situation of "good signal quality" can be performed (such as not initiating retransmission).

For example, in an embodiment of the present disclosure, the parameter threshold may be, for example, an RSRP threshold, and the first measurement value of the reference signal may be, for example, the RSRP of the SSB. If the RSRP of the SSB is greater than or equal to the RSRP threshold, it indicates that the signal quality of the SSB is good, and retransmission is not initiated. If the RSRP of the SSB is less than the RSRP threshold, it indicates that the signal quality of the SSB is poor, and retransmission is initiated.

Furthermore, regarding steps 102b-103b mentioned above, it should be noted that in an embodiment of the present disclosure, when the antenna configuration of the UE is different, the measurement accuracy of the UE for the reference signal will also vary. Specifically, if the antenna configuration of the UE is low (i.e. the first antenna configuration under FR1 and the first antenna configuration under FR2), the measurement accuracy of the UE for the reference signal will be low, and the measurement error will be large. If the antenna configuration of the UE is high (i.e. the second antenna configuration under FR1 and the second antenna configuration under FR2), the measurement accuracy of the UE for the reference signal will be high and the measurement error will be small.

In an embodiment of the present disclosure, when the measurement accuracy and/or measurement error of the UE is different, the measurement value of the UE for the reference signal will also vary. The signal quality of the reference signal is determined based on the size relationship between the parameter threshold and the measurement value of the reference signal by the UE, and the operation corresponding to the signal quality of the reference signal is performed based on the size relationship between the parameter threshold and the measurement value of the reference signal by the UE. Therefore, in an embodiment of the present disclosure, when the measurement values of the reference signal by the UE with different antenna configurations are different, the parameter thresholds corresponding to the UE with different antenna configurations should also be different to ensure the accuracy of the judgment of the signal quality of the reference signal by the UE with different antenna configurations, and thus ensure the accuracy of subsequent operations to ensure the coverage performance of the signal. Alternatively, in an embodiment of the present disclosure, when the measurement values of the reference signal are different for the UE with different antenna configurations, the parameter thresholds corresponding to the UE with different antenna configurations may be the same. However, when performing operations based on the parameter thresholds and the measurement values of the reference signal, the operations performed by the UE with different antenna configurations should be made different to ensure that the operations performed are matched with the antenna configurations of the UE, thereby ensuring the accuracy of the operation and ensuring the coverage performance of the signal.

Based on this, in an embodiment of the present disclosure, the method for determining the parameter threshold for UE with different antenna configurations may vary (i.e., the execution process of step 102b above is different). Alternatively, in another embodiment of the present disclosure, the method for determining the parameter threshold for UE with different antenna configurations may be the same, but the subsequent operations performed by UE with different antenna configurations based on the parameter threshold may vary (i.e., the execution process of step 103b described above is different). The detailed introduction of this part will be provided in the following embodiments.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

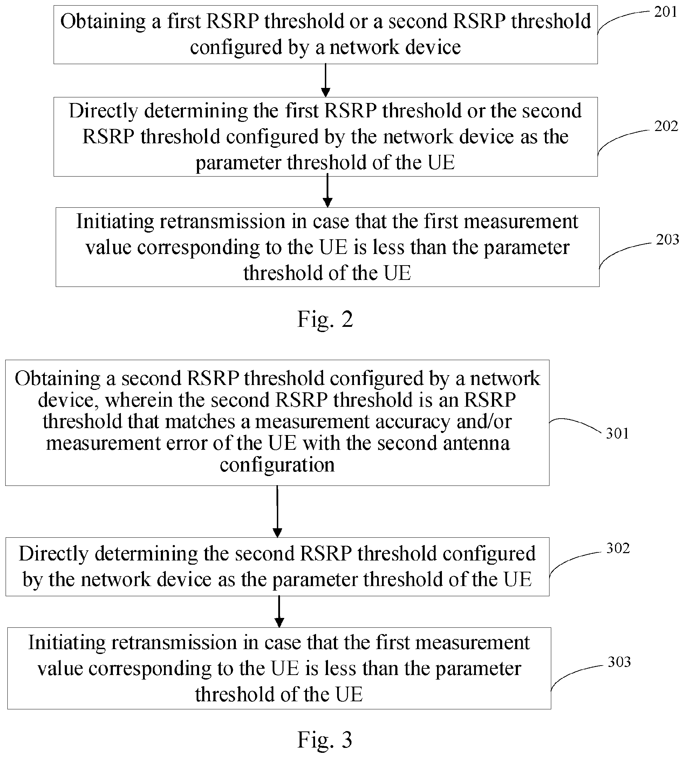

Fig. 2 is a schematic flowchart of a threshold determination method provided in an embodiment of the present disclosure. The method is performed by UE, and antenna configuration of the UE is either the first antenna configuration or the second antenna configuration. As shown in Fig. 2, the threshold determination method may include the foll owing steps.

In step 201, a first RSPR threshold or a second RSRP threshold configured by a network device is obtained.

In an embodiment of the present disclosure, the first RSRP threshold is different from the second RSRP threshold. The first RSRP threshold is configured by the network device for the UE with the first antenna configuration, and the second RSRP threshold is configured by the network device for the UE with the second antenna configuration. The first RSRP threshold and the second RSRP threshold may match the measurement accuracy and/or measurement error corresponding to the UE with different antenna configurations. Specifically, the first RSRP threshold may be determined by the network device based on the measurement accuracy of the UE with the first antenna configuration, the radius of the current cell in which the UE is located, the distance from the UE to the network device, and the transmission power of the network device to match the measurement accuracy and/or measurement error of the UE with the first antenna configuration, and the second RSRP threshold may be determined by the network device based on the measurement accuracy of the UE with the second antenna configuration, the radius of the current cell in which the UE is located, the distance from the UE to the network device, and the transmission power of the network device to match the measurement accuracy and/or measurement error of the UE with the second antenna configuration.

Based on this, in an embodiment of the present disclosure, the first RSRP threshold obtained by the UE with the first antenna configuration under FR1 or FR2 is not the same, and the second RSRP threshold obtained by the UE with the second antenna configuration under FR1 or FR2 is not the same. Table 1 is a correspondence table between UE with different antenna configurations under FR1 or FR2 and the first RSRP threshold or the second RSRP threshold provided in an embodiment of the present disclosure.

**Table 1**

| FR1 | | FR2 | |
|---|---|---|---|
| First antenna configuration (1 RX) | Threshold 1 | First antenna configuration (2 RX w/. element reduction) | Threshold 1' |
| Second antenna configuration (2 RX) | Threshold 2 | Second antenna configuration (2 RX w/o element reduction) | Threshold 2' |

As shown in Table 1, the first RSRP threshold configured by the network device and obtained by the UE with the first antenna configuration (i.e., UE with 1RX) under FR1 may be Threshold 1, the second RSRP threshold configured by the network device and obtained by the UE with the second antenna configuration (i.e., UE with 2RX) under FR1 may be Threshold 2, the first RSRP threshold configured by the network device and obtained by the UE with the first antenna configuration (i.e., UE with 2 RX w/. element reduction) under FR2 may be Threshold 1', and the second RSRP threshold configured by the network device and obtained by the UE with the second antenna configuration (i.e., UE with 2 RX w/o element reduction) under FR2 may be Threshold 2'.

In an embodiment of the present disclosure, the above-mentioned Threshold 1 # Threshold 2 # Threshold 1 '# Threshold 2'.

In step 202, the first RSRP threshold or the second RSRP threshold configured by the network device is directly determined as the parameter threshold of the UE.

Specifically, in an embodiment of the present disclosure, in response to the antenna configuration of the UE being the first antenna configuration, the first RSRP threshold configured by the network device is directly determined as the parameter threshold of the UE; in response to the antenna configuration of the UE being the second antenna configuration, the second RSRP threshold configured by the network device is directly determined as the parameter threshold of the UE.

In an embodiment of the present disclosure, since the first RSRP threshold or second RSRP threshold configured by the network device to the UE in step 201 matches the measurement accuracy and/or measurement error corresponding to different antenna configurations of the UE, in step 202, the UE with the first antenna configuration can directly determine the first RSRP threshold that matches its measurement accuracy as its parameter threshold, and the UE with the second antenna configuration can directly determine the second RSRP threshold that matches its measurement accuracy as its parameter threshold.

For example, in an embodiment of the present disclosure, if the UE is the UE with the first antenna configuration under FR1, the UE can directly determine the Threshold 1 configured by the network device as its corresponding parameter threshold.

In step 203, retransmission is initiated when the first measurement value corresponding to the UE is less than the parameter threshold of the UE.

Specifically, in an embodiment of the present disclosure, if the first measurement value of the reference signal is less than the parameter threshold, it indicates that the signal quality of the reference signal is poor, and the transmission of the reference signal may fail. At this time, retransmission (such as MSG3 retransmission) can be initiated to improve the coverage performance of MSG3. If the first measurement value of the reference signal is greater than or equal to the parameter threshold, it indicates that the signal quality of the reference signal is good, and retransmission may not be initiated.

It should be noted that in an embodiment of the present disclosure, the first RSRP threshold or second RSRP threshold configured for UE with different antenna configurations is different, and the RSRP threshold configured for UE with different antenna configurations is matched with the measurement accuracy and/or measurement error corresponding to their antenna configurations. Therefore, when UE with different antenna configurations determine the RSRP threshold configured by the network device as the parameter threshold of the UE, the accuracy of signal quality determination can be ensured when determining the signal quality of the reference signal based on the parameter threshold. This can ensure the accuracy of subsequent operations and avoid the problem of "the UE with low antenna configuration should perform a certain operation (such as initiating retransmission), but based on the configured same parameter threshold for the UE with different antenna configurations, the UE does not need to perform the operation (i.e., does not need to initiate retransmission)", thus ensuring signal coverage performance.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UE with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Fig. 3 is a schematic flowchart of a threshold determination method provided in an embodiment of the present disclosure. The method is performed by a UE, and as shown in Fig. 3, the threshold determination method may include the following steps.

In step 301, a second RSRP threshold configured by a network device is obtained, in which the second RSRP threshold is an RSRP threshold that matches the measurement accuracy and/or measurement error of the UE with the second antenna configuration.

In the embodiment corresponding to Fig. 3, the UE specifically refers to the UE with the antenna configuration being the second antenna configuration.

In an embodiment of the present disclosure, the second RSRP threshold can be determined by the network device based on the measurement accuracy of the UE corresponding to the second antenna configuration, the radius of the current cell where the UE is located, the distance from the UE to the network device, and the transmission power of the network device.

In step 302, the second RSRP threshold configured by the network device is directly determined as the parameter threshold of the UE.

In step 303, retransmission is initiated when the first measurement value corresponding to the UE is less than the parameter threshold of the UE.

In an embodiment of the present disclosure, with respect to detailed descriptions of steps 301-303, reference can be made to the relevant descriptions in the above embodiments, which will not be repeated here.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

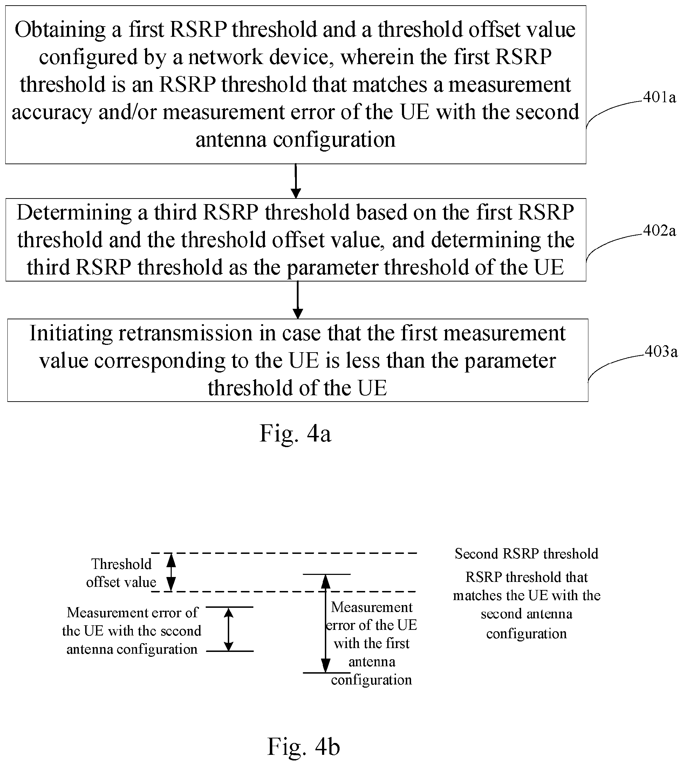

Fig. 4a is a schematic flowchart of a threshold determination method provided in an embodiment of the present disclosure. The method is performed by a UE, and in the embodiment shown in Fig. 4, the UE is in the first antenna configuration. As shown in Fig. 4a, the threshold determination method may include the following steps.

In step 401a, a first RSRP threshold and a threshold offset value configured by a network device are obtained, in which the first RSRP threshold is an RSRP threshold that matches a measurement accuracy and/or measurement error of the UE with the second antenna configuration.

In the embodiment corresponding to Fig. 4a, the UE specifically refers to the UE with the antenna configuration being the first antenna configuration.

In an embodiment of the present disclosure, the first RSRP threshold may be determined by the network device based on the measurement accuracy of the UE corresponding to the second antenna configuration, the radius of the current cell where the UE is located, the distance from the UE to the network device, and the transmission power of the network device.

Further, it should be noted that in an embodiment of the present disclosure, for the UE with the first antenna configuration, the measurement accuracy is not the same as that of the UE with the second antenna configuration due to their different antenna configurations. Therefore, the RSRP threshold that matches the UE with the second antenna configuration cannot match the UE with the first antenna configuration. Based on this, in an embodiment of the present disclosure, the UE can also obtain the threshold offset value configured by the network device, in which the threshold offset value should satisfy the following conditions: the third RSRP threshold obtained by offsetting the RSRP threshold that matches the UE with the second antenna configuration based on the threshold offset value should match the measurement accuracy and/or measurement error corresponding to the UE with the first antenna configuration.

In an embodiment of the present disclosure, the threshold offset value may be determined by the network device based on the measurement accuracy of the UE corresponding to the first antenna configuration, the radius of the cell where the UE is currently located, the distance from the UE to the network device, and the transmission power of the network device, as well as the measurement accuracy of the UE corresponding to the second antenna configuration, the radius of the cell where the UE is currently located, the distance from the UE to the network device, and the transmission power of the network device.

In step 402a, the third RSRP threshold is determined based on the first RSRP threshold and the threshold offset value, and the third RSRP threshold is determined as the parameter threshold of the UE.

In an embodiment of the present disclosure, the method for determining the third RSRP threshold based on the first RSRP threshold and the threshold offset value may include: the third RSRP threshold=the first RSRP threshold + the threshold offset value, where the threshold offset value is a positive number.

Specifically, in an embodiment of the present disclosure, since the measurement accuracy of the UE with the first antenna configuration is lower than that of the UE with the second antenna configuration, the measurement error of the UE with the first antenna configuration is relatively large. That is to say, when the UE with the first antenna configuration and the UE with the second antenna configuration are at the same position in the cell, the measurement value of the UE with the first antenna configuration for the reference signal will be higher than that of the UE with the second antenna configuration for the reference signal. Therefore, the RSRP threshold that matches the UE with the second antenna configuration (i.e., the first RSRP threshold in step 401a above) should be added with a threshold offset value to obtain the third RSRP threshold, which can be matched with the measurement accuracy and/or measurement error of the UE with the first antenna configuration, and can be determined as the parameter threshold of the UE. Fig. 4b is a schematic diagram of a parameter threshold determined by a UE provided in an embodiment of the present disclosure. Referring to Fig. 4b, the parameter threshold (i.e., the third RSRP threshold) corresponding to the UE with the first antenna configuration (1RX) should be the sum of the RSRP threshold (i.e., the first RSRP threshold in step 401a) that matches the UE with the second antenna configuration (2RX) and the threshold offset value, and the third RSRP threshold should match the measurement error of the UE with the first antenna configuration.

In step 403a, retransmission is initiated when the first measurement value corresponding to the UE is less than the parameter threshold of the UE.

Specifically, in an embodiment of the present disclosure, when the first measurement value of the reference signal corresponding to the UE with the first antenna configuration is less than its corresponding parameter threshold, retransmission is initiated; otherwise, no retransmission is initiated.

In an embodiment of the present disclosure, with respect to the detailed introduction of step 403a, reference can be made to the relevant introduction in the above embodiment, which will not be repeated here.

In an embodiment of the present disclosure, the parameter threshold (i.e., the third RSRP threshold) determined for the UE with the first antenna configuration in step 402a is matched with the measurement accuracy and/or measurement error of the UE with the first antenna configuration. Therefore, when the UE with the first antenna configuration determines the signal quality of the reference signal based on its corresponding parameter threshold, the accuracy of the signal quality determination can be ensured, thereby ensuring the accuracy of subsequent operations. This can avoid the problem of "UE with low antenna configuration should perform a certain operation (such as starting retransmission), but based on the configured same parameter threshold for the UE with different antenna configurations, it is determined that the UE does not need to perform the operation (i.e. does not need to start retransmission) ", thus ensuring signal coverage performance.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. **In** one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UE with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

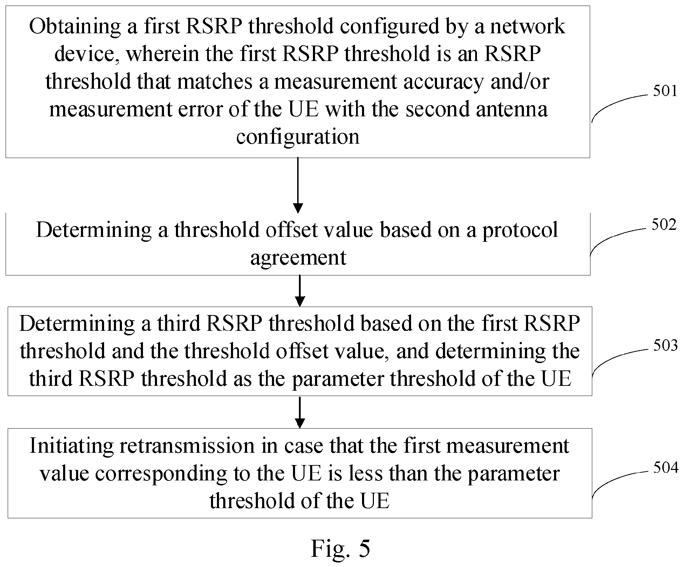

Fig. 5 is a schematic flowchart of a threshold determination method provided in an embodiment of the present disclosure. The method is performed by a UE. As shown in Fig. 5, the threshold determination method may include the following steps.

In step 501, a first RSRP threshold configured by a network device is obtained, in which the first RSRP threshold is an RSRP threshold that matches a measurement accuracy and/or measurement error of the UE with the second antenna configuration.

In the embodiment corresponding to Fig. 5, the UE specifically refers to a UE with the antenna configuration being the first antenna configuration.

In an embodiment of the present disclosure, the first RSRP threshold can be determined by the network device based on the measurement accuracy of the UE corresponding to the second antenna configuration, the radius of the current cell where the UE is located, the distance from the UE to the network device, and the transmission power of the network device.

In step 502, a threshold offset value is determined based on a protocol agreement.

With respect to relevant introduction of the threshold offset value, reference can be made to the description in the above embodiments, which will not be repeated here.

In step 503, a third RSRP threshold is determined based on the first RSRP threshold and the threshold offset value, and the third RSRP threshold is determined as the parameter threshold of the UE.

In step 504, retransmission is initiated when the first measurement value corresponding to the UE is less than the parameter threshold of the UE.

In an embodiment of the present disclosure, with respect to detailed description of steps 503~504, reference can be made to relevant introduction in the above embodiments, which will be repeated here.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UE with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

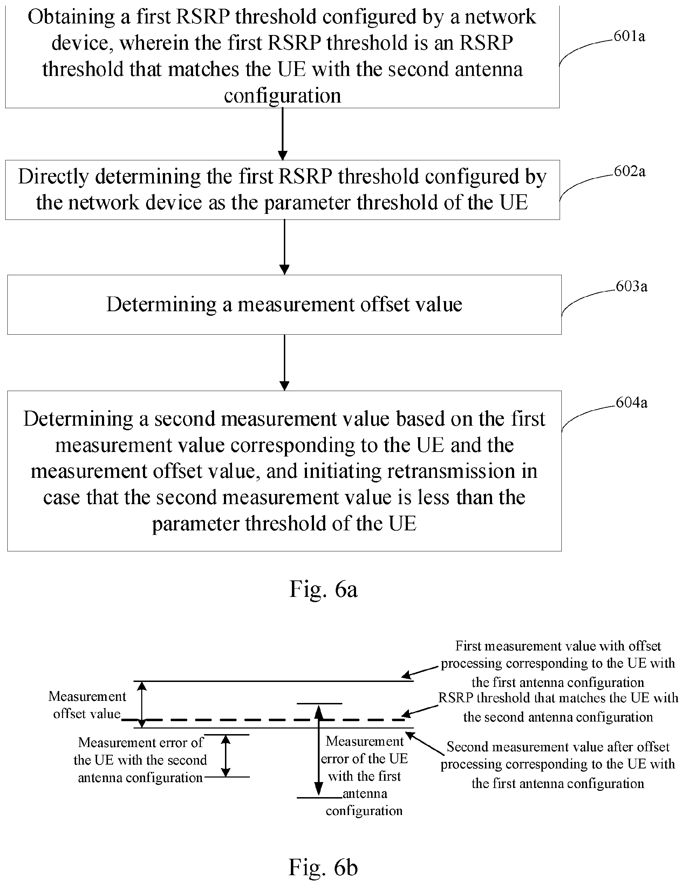

Fig. 6a is a schematic flowchart of a threshold determination method provided in an embodiment of the present disclosure. The method is performed by a UE, and in the embodiment corresponding to Fig. 6a, the UE is in the first antenna configuration. As shown in Fig. 6a, the threshold determination method may include the following steps.

In step 601a, a first RSRP threshold configured by a network device is obtained, in which the first RSRP threshold is an RSRP threshold that matches a measurement accuracy and/or measurement error of the UE with the second antenna configuration.

In the embodiment corresponding to Fig. 6a, the UE specifically refers to a UE with the antenna configuration being the first antenna configuration.

In step 602a, the first RSRP threshold configured by the network device is determined as the parameter threshold of the UE.

In step 603a, a measurement offset value is determined.

It should be noted that, according to steps 601-602 mentioned above, in an embodiment of the present disclosure, the RSRP threshold that matches the UE with the second antenna configuration (i.e., the first RSRP threshold in step 601a mentioned above) is determined as the parameter threshold of the UE with the first antenna configuration. However, due to the difference in measurement accuracy between the UE with the first antenna configuration and the UE with the second antenna configuration, the RSRP threshold that matches the UE with the second antenna configuration does not match the UE with the first antenna configuration. Based on this, after determining the RSRP threshold that matches the UE with the second antenna configuration as the parameter threshold of the UE with the first antenna configuration (i.e., the action performed in step 602a above), if the operation is still performed according to the original method (i.e., when the measurement value of the reference signal by the UE with the first antenna configuration is less than the parameter threshold of the UE with the first antenna configuration, retransmission is initiated), a situation will occur where "the UE with the first antenna configuration should have initiated retransmission, but based on the configured parameter threshold, it is determined that the UE does not need to initiate retransmission" (refer to the above content for specific reasons), which will affect the signal coverage performance.

In an embodiment of the present disclosure, after determining the RSRP threshold that matches the UE with the second antenna configuration as the parameter threshold that matches the UE with the first antenna configuration, a measurement offset value should also be determined. This measurement offset value can be used to offset the subsequent measurement value of the reference signal by the UE with the first antenna configuration, to compensate for the error caused by using the RSRP threshold that matches the UE with the second antenna configuration as the parameter threshold that matches the UE with the first antenna configuration due to different antenna configurations, and to ensure the accuracy of subsequent operation execution.

In an embodiment of the present disclosure, the method for determining the measurement offset value may include at least one of:
determining the measurement offset value based on the protocol agreement; or
obtaining the measurement offset value configured by the network device.

In step 604a, a second measurement value is determined based on the first measurement value corresponding to the UE and the measurement offset value, and retransmission is initiated when the second measurement value is less than the parameter threshold of the UE.

In an embodiment of the present disclosure, the method of determining the second measurement value based on the first measurement value corresponding to the UE and the measurement offset value may include: the second measurement value=the first measurement value corresponding to the UE - the measurement offset value, where the measurement offset value is a positive number. Fig. 6b is a schematic diagram of determining the second measurement value corresponding to the UE provided in an embodiment of the present disclosure. As shown in Fig. 6b, due to the measurement error of the UE with the first antenna configuration being greater than that of the UE with the second antenna configuration, the first measurement value of the reference signal without offset processing for the UE with the first antenna configuration (i.e. 1RX) may be greater than the parameter threshold of the UE with the first antenna configuration in step 602a (i.e. the first RSRP threshold matched with the measurement accuracy and/or measurement error of the UE with the second antenna configuration in step 601a), while the second measurement value after offset processing is less than the parameter threshold configured by the network device to the UE with the first antenna configuration in step 602a, thus compensating for the error caused by using the RSRP threshold that matches the UE with the second antenna configuration as the parameter threshold of the UE with the first antenna configuration.

From this, it can be seen that in an embodiment of the present disclosure, when the RSRP threshold that matches the UE with the second antenna configuration is configured as the parameter threshold of the UE with the first antenna configuration, the UE will further determine the measurement offset value and perform offset processing on the measurement value by the UE with the first antenna configuration for the reference signal based on this measurement offset value, in order to compensate for the error caused by using the parameter threshold that matches the UE with the second antenna configuration as the parameter threshold configured with the UE with the first antenna. This can avoid the problem of "UE with low antenna configuration should have performed a certain operation (such as initiating retransmission), but based on the configured same parameter threshold for the UE with different antenna configurations, it is determined that the UE does not need to perform the operation (i.e. does not need to initiate retransmission)", thus ensuring signal coverage performance.

**In** summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. **In** one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UE with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

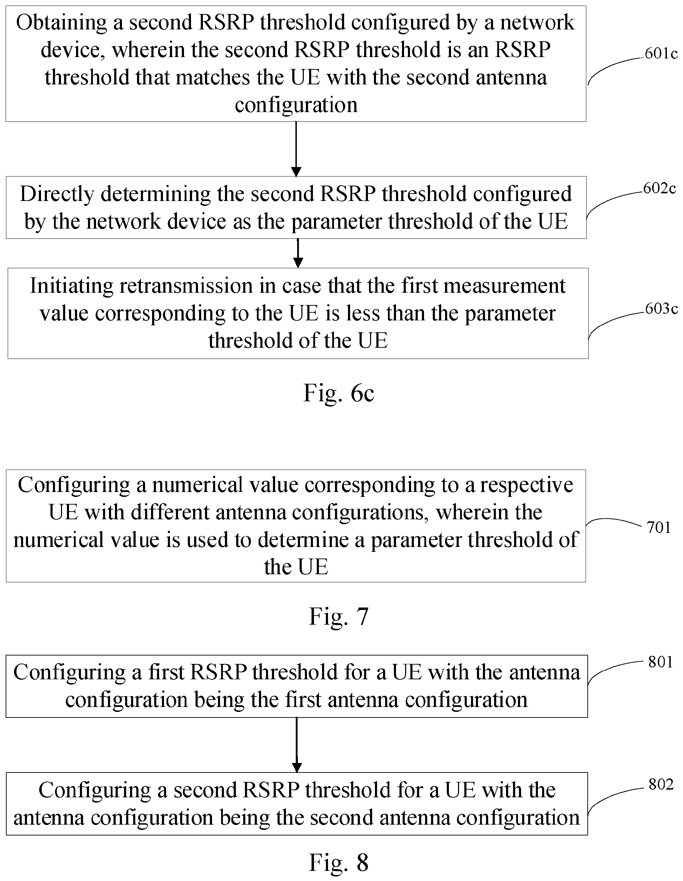

Fig. 6c is a schematic flowchart of a threshold determination method provided in an embodiment of the present disclosure. The method is performed by a UE, and in the embodiment corresponding to Fig. 6c, the UE is in the second antenna configuration. As shown in Fig. 6c, the threshold determination method may include the following steps.

In step 601c, a second RSRP threshold configured by a network device is obtained, in which the second RSRP threshold is an RSRP threshold that matches the UE with the second antenna configuration.

In step 602c, the second RSRP threshold configured by the network device is directly determined as the parameter threshold of the UE.

In step 603c, retransmission is initiated when the first measurement value corresponding to the UE is less than the parameter threshold of the UE.

In an embodiment of the present disclosure, with respect to detailed description of steps 601 c~602c, reference can be made to relevant introduction in the above embodiments, which will not be repeated here.

In summary, in the threshold determination method provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UE with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Fig. 7 is a schematic flowchart of a threshold determination method provided in an embodiment of the present disclosure. The method is performed by a network device. As shown in Fig. 7, the threshold determination method may include the following steps.

In step 701, a numerical value corresponding to a respective UE with different antenna configurations is configured, in which the numerical value is used to determine a parameter threshold corresponding to the UE.

In an embodiment of the present disclosure, the operating frequency range supported by the UE may vary, and the antenna configuration corresponding to different frequency ranges may also differ.

Specifically, in an embodiment of the present disclosure, the operating frequency range supported by the UE may be FR1, and under FR1, the antenna configuration of the UE may be either the first antenna configuration or the second antenna configuration. In an embodiment of the present disclosure, under FR1, the number of antennas corresponding to the first antenna configuration is less than the number of antennas corresponding to the second antenna configuration. For example, in an embodiment of the present disclosure, under FR1, the first antenna configuration may be: 1 RX (receive) antenna, and the second antenna configuration may be: 2 RX antennas.

In another embodiment of the present disclosure, the operating frequency range supported by the UE may be FR2, and under FR2, the antenna configuration of the UE may also be the first antenna configuration or the second antenna configuration. In an embodiment of the present disclosure, under FR2, the number of antenna elements corresponding to the first antenna configuration is less than the number of antenna elements corresponding the second antenna configuration. For example, in an embodiment of the present disclosure, the first antenna configuration under FR2 is 2 RX w/. element reduction (i.e. 2 receiving antennas with reduced antenna elements), the second antenna configuration of the UE under FR2 may be 2 RX w/o element reduction (i.e. 2 receiving antennas without reduced antenna elements).

In an embodiment of the present disclosure, the UE with the first antenna configuration (1RX) under FR1 may be a Redcap UE (Reduced Capability User Equipment), and the UE with the second antenna configuration (2RX) under FR1 may be a Redcap UE and/or non-Redcap UE. Moreover, in an embodiment of the present disclosure, the UE with the first antenna configuration (2 RX w/. element reduction) under FR2 may be a Redcap UE, and the UE with the second antenna configuration (2 RX w/o element reduction) under FR2 may be a non-Redcap UE.

Further, in an embodiment of the present disclosure, configuring the numerical value corresponding to the respective UE with different antenna configurations will be explained in detail in the following embodiments.

In summary, in the threshold determination method provided in an embodiment of the present disclosure, the network device can configure corresponding values for each UE with different antenna configurations, which are used to determine the parameter threshold corresponding to the UE. In one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Fig. 8 is a schematic flowchart of a threshold determination method provided in an embodiment of the present disclosure. The method is performed by a network device, and as shown in Fig. 8, the threshold determination method may include the following steps.

In step 801, a first RSRP threshold is configured for the UE with the antenna configuration being the first antenna configuration.

In step 802, a second RSRP threshold is configured for the UE with the antenna configuration being the second antenna configuration.

It should be noted that in an embodiment of the present disclosure, the first RSRP threshold or second RSRP threshold configured by the network device for each UE should match the measurement accuracy and/or measurement error of the antenna configuration of the UE.

In an embodiment of the present disclosure, the first RSRP threshold configured for the UE with the first antenna configuration under FR1 is different from the first RSRP threshold configured for the UE with the first antenna configuration under FR2. The second RSRP threshold configured for the UE with the second antenna configuration under FR2 is different from the second RSRP threshold configured for the UE with the second antenna configuration under FR2.

Furthermore, the operations performed by the network device in the embodiment of Fig. 8 are specifically the interactions with the UE in the embodiment of Fig. 2 mentioned above.

In summary, in the threshold determination method provided in an embodiment of the present disclosure, the network device can configure corresponding values for each UE with different antenna configurations, which are used to determine the parameter threshold corresponding to the UE. In one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

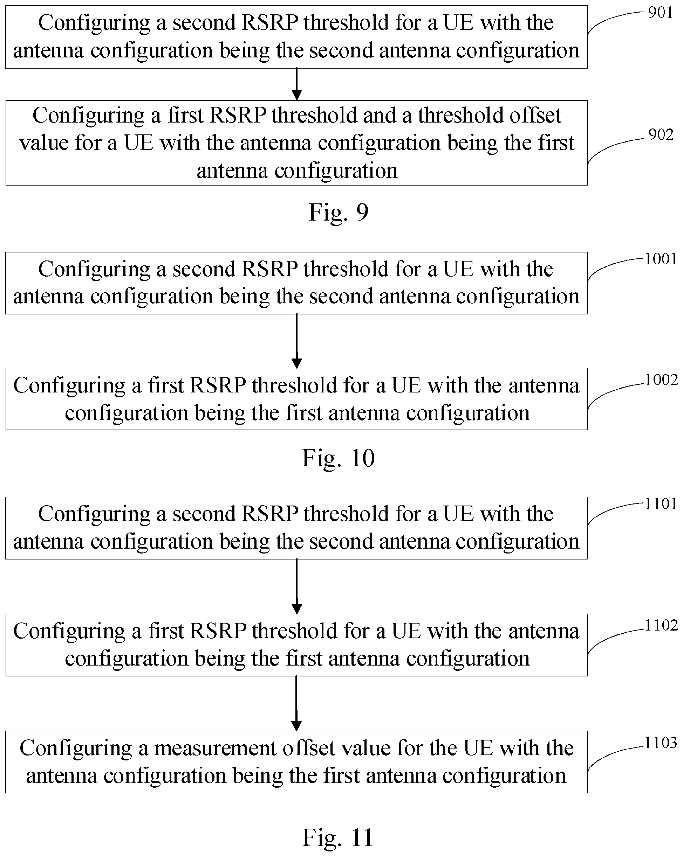

Fig. 9 is a schematic flowchart of a threshold determination method provided in an embodiment of the present disclosure. The method is performed by a network device. As shown in Fig. 9, the threshold determination method may include the following steps.

In step 901, a second RSRP threshold is configured for a UE with the antenna configuration being the second antenna configuration.

In an embodiment of the present disclosure, the second RSRP threshold is an RSRP threshold matched with the measurement accuracy and/or measurement error of the UE with the second antenna configuration.

In an embodiment of the present disclosure, the second RSRP threshold can be determined by the network device based on the measurement accuracy of the UE corresponding to the second antenna configuration, the radius of the current cell where the UE is located, the distance from the UE to the network device, and the corresponding transmission power of the network device. Moreover, the second RSRP threshold is the RSRP threshold that matches the UE with the second antenna configuration.

Further, in an embodiment of the present disclosure, the UE with the second antenna configuration can determine the configured second RSRP threshold as the parameter threshold of the UE, and perform the corresponding operation based on the relationship between the parameter threshold and the measurement value corresponding to the reference signal.

The operation of step 901 performed by the network device in the embodiment of Fig. 9 is specifically an interaction operation with the UE in the embodiment of Fig. 3 mentioned above.

In step 902, a first RSRP threshold and a threshold offset value are configured for the UE with the antenna configuration being the first antenna configuration.

In an embodiment of the present disclosure, the first RSRP threshold configured for the UE with the first antenna configuration is equal to the second RSRP threshold configured for the UE with the second antenna configuration.

It should be noted that in an embodiment of the present disclosure, for the UE with the first antenna configuration, the measurement accuracy is also different from that of the UE with the second antenna configuration due to their different antenna configurations Therefore, the RSRP threshold that matches the UE with the second antenna configuration cannot match the UE with the first antenna configuration. Based on this, in an embodiment of the present disclosure, the network device may also configure a threshold offset value for the UE with the first antenna configuration, in which the threshold offset value should meet the following conditions: the third RSRP threshold obtained by offsetting the RSRP threshold that matches the UE with the second antenna configuration based on the threshold offset value should match the measurement accuracy and/or measurement error corresponding to the UE with the first antenna configuration.

In an embodiment of the present disclosure, the network device may determine the threshold offset value based on the measurement accuracy of the UE corresponding to the first antenna configuration, the radius of the current cell where the UE is located, the distance from the UE to the network device, and the transmission power of the network device, as well as the measurement accuracy of the UE corresponding to the second antenna configuration, the radius of the current cell where the UE is located, the distance from the UE to the network device, and the transmission power of the network device.

In an embodiment of the present disclosure, the UE with the first antenna configuration can determine its parameter threshold based on the configured first RSRP threshold and threshold offset value, and perform corresponding operation based on the size relationship between the parameter threshold and the measurement value corresponding to the reference signal.

Further, in an embodiment of the present disclosure, the execution order of step 901 and step 902 is not in any particular order, and step 901 may be executed before, after, or simultaneously with step 902.

The operation of step 902performed by the network device in the embodiment of Fig. 9 is specifically an interaction operation with the UE in the embodiment of Fig. 4 mentioned above.

In summary, in the threshold determination method provided in an embodiment of the present disclosure, the network device can configure corresponding values for each UE with different antenna configurations, which are used to determine the parameter threshold corresponding to the UE. In one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Fig. 10 is a schematic flowchart of a threshold determination method provided in an embodiment of the present disclosure. The method is performed by a network device. As shown in Fig. 10, the threshold determination method may include the following steps.

In step 1001, a second RSRP threshold is configured for a UE with the antenna configuration being the second antenna configuration.

In step 1002, a first RSRP threshold is configured for the UE with the antenna configuration being the first antenna configuration.

In an embodiment of the present disclosure, the first RSRP threshold configured for the UE with the first antenna configuration and the second RSRP threshold configured for the UE with the second antenna configuration are equal, and both the first and second RSRP thresholds are RSRP thresholds that match the measurement accuracy and/or measurement error of the UE with the second antenna configuration.

The operations performed by the network device in the embodiment of Fig. 10 are specifically interactive operations with the UE in the embodiments of Fig. 5 or Fig. 6c mentioned above.

In summary, in the threshold determination method provided in an embodiment of the present disclosure, the network device can configure corresponding values for each UE with different antenna configurations, which are used to determine the parameter threshold corresponding to the UE. In one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Fig. 11 is a schematic flowchart of a threshold determination method provided in an embodiment of the present disclosure. The method is performed by a network device, and as shown in Fig. 11, the threshold determination method may include the following steps.

In step 1101, a second RSRP threshold is configured for a UE with the antenna configuration being the second antenna configuration.

In step 1102, a first RSRP threshold is configured for the UE with the antenna configuration being the first antenna configuration.

In an embodiment of the present disclosure, the first RSRP threshold configured for the UE with the first antenna configuration and the second RSRP threshold configured for the UE with the second antenna configuration are equal, and both the first and second RSRP thresholds are RSRP thresholds that match the measurement accuracy and/or measurement error of the UE with the second antenna configuration.

In step 1103, a measurement offset value is configured for the UE with the antenna configuration being the first antenna configuration.

In an embodiment of the present disclosure, in step 1103, the network device determines the second RSRP threshold that matches the UE with the second antenna configuration as the first RSRP threshold of the UE with the first antenna configuration. However, due to the difference in measurement accuracy between the UE with the first antenna configuration and the UE with the second antenna configuration, the second RSRP threshold that matches the UE with the second antenna configuration does not match the UE with the first antenna configuration. Based on this, if the second RSRP threshold that matches the UE with the second antenna configuration is determined as the parameter threshold of the UE with the first antenna configuration, and the operation is still performed according to the original method (i.e., when the measurement value by the UE with the first antenna configuration for the reference signal is less than the parameter threshold of the UE with the first antenna configuration, retransmission is initiated), there will be a situation where "the UE with the first antenna configuration should have initiated retransmission, but it is determined based on the configured parameter threshold that the UE does not need to initiate retransmission" (for specific reasons, refer to the above content), which will affect the signal coverage performance.

Thus, in an embodiment of the present disclosure, after determining the RSRP threshold that matches the UE with the second antenna configuration as the parameter threshold of the UE with the first antenna configuration, the network device also configures a measurement offset value for the UE with the first antenna configuration. This measurement offset value can be used later to offset the first measurement value by the UE with the first antenna configuration for the reference signal, to compensate for the error caused by using the second RSRP threshold that matches the UE with the second antenna configuration as the RSRP threshold of the UE with the first antenna configuration due to different antenna configurations, and to ensure the accuracy of subsequent operations.

The operations performed by the network device in the embodiment of Fig. 11 are specifically interactive operations with the UE in the embodiments of Fig. 6a mentioned above.

In summary, in the threshold determination method provided in an embodiment of the present disclosure, the network device can configure corresponding values for each UE with different antenna configurations, which are used to determine the parameter threshold corresponding to the UE. **In** one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

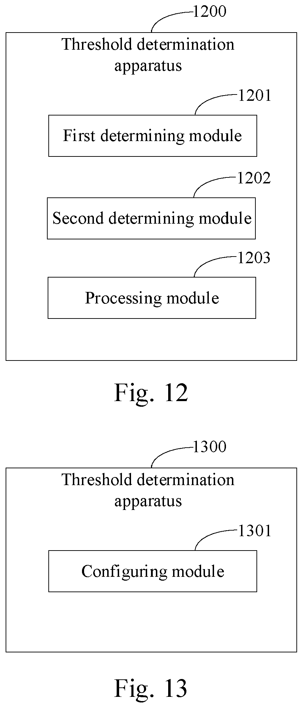

Fig. 12 is a block diagram of a threshold determination apparatus provided in an embodiment of the present disclosure. As shown in Fig. 12, the apparatus may include a first determining module 1201, a second determining module 1202 and a processing module 1203.

The first determining module 1201 is configured to determine a numerical value corresponding to the UE.

The second determining module 1202 is configured to determine a parameter threshold of the UE based on the numerical value.

The processing module 1203 is configured to perform a corresponding operation based on a size relationship between a first measurement value corresponding to a reference signal and the parameter threshold.

**In** summary, in the threshold determination apparatus provided in embodiments of the present disclosure, the UE can determine the numerical value corresponding to the UE, where the numerical value is used to determine the parameter threshold corresponding to the UE. Afterwards, the UE can determine the parameter threshold corresponding to the UE based on the numerical value, and perform the corresponding operation based on the size relationship between the first measurement value corresponding to the reference signal and the parameter threshold. In one embodiment of the present disclosure, different parameter thresholds can be determined for UEs with different antenna configurations based on the above numerical value, and the parameter thresholds are matched with the measurement accuracy and/or measurement error corresponding to the UEs with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above numerical value. However, when performing the corresponding operation based on the size relationship between the measurement value corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Optionally, in an embodiment of the present disclosure, the parameter threshold includes a reference signal receiving power (RSRP) threshold.

Optionally, in an embodiment of the present disclosure, an operating frequency range supported by the UE is FR1; an antenna configuration of the UE is either a first antenna configuration or a second antenna configuration; in which, a number of antennas corresponding to the first antenna configuration is less than a number of antennas corresponding to the second antenna configuration.

Optionally, in an embodiment of the present disclosure, an operating frequency range supported by the UE is FR2; an antenna configuration of the UE is either a first antenna configuration or a second antenna configuration; in which, a number of antenna elements corresponding to the first antenna configuration is less than a number of antenna elements corresponding to the second antenna configuration.

Optionally, in an embodiment of the present disclosure, the antenna configuration of the UE is either the first antenna configuration or the second antenna configuration, and the second determining module 1202 is further configured to:
obtain a first RSRP threshold or a second RSRP threshold configured by a network device, in which the first RSRP threshold is different from the second RSRP threshold, the first RSRP threshold is configured by the network device for the UE with the first antenna configuration, and the second RSRP threshold is configured by the network device for the UE with the second antenna configuration.

Optionally, in an embodiment of the present disclosure, the antenna configuration of the UE is either the first antenna configuration or the second antenna configuration, and the second determining module 1202 is further configured to:
in response to the antenna configuration of the UE being the first antenna configuration, directly determine the first RSRP threshold configured by the network device as the parameter threshold of the UE; and
in response to the antenna configuration of the UE being the second antenna configuration, directly determine the second RSRP threshold configured by the network device as the parameter threshold of the UE.

Optionally, in an embodiment of the present disclosure, the antenna configuration of the UE is the second antenna configuration, and the first determining module 1201 is further configured to:
obtain a second RSRP threshold configured by the network device, in which the second RSRP threshold is an RSRP threshold that matches a measurement accuracy and/or measurement error of the UE with the second antenna configuration.

Optionally, in an embodiment of the present disclosure, the antenna configuration of the UE is the second antenna configuration, and the first determining module 1201 is further configured to:
directly determine the second RSRP threshold configured by the network device as the parameter threshold of the UE.

Optionally, in an embodiment of the present disclosure, the antenna configuration of the UE is the first antenna configuration, and the first determining module 1201 is further configured to:
obtain a threshold offset value and a first RSRP threshold configured by the network device, in which the first RSRP threshold is an RSRP threshold that matches a measurement accuracy and/or measurement error of the UE with the second antenna configuration.

Optionally, in an embodiment of the present disclosure, the antenna configuration of the UE is the first antenna configuration, and the first determining module 1201 is further configured to:
obtain a first RSRP threshold configured by the network device, in which the first RSRP threshold is an RSRP threshold that matches the UE with the second antenna configuration; and
determine a threshold offset value based on a protocol agreement.

Optionally, in an embodiment of the present disclosure, the antenna configuration of the UE is the first antenna configuration, and the second determining module 1202 is further configured to:
determine a third RSRP threshold based on the first RSRP threshold and the threshold offset value; and
determine the third RSRP threshold as the parameter threshold of the UE.

Optionally, in an embodiment of the present disclosure, the processing module 1203 is further configured to:
initiate retransmission in case that the first measurement value corresponding to the reference signal of the UE is less than the parameter threshold of the UE.

Optionally, in an embodiment of the present disclosure, the antenna configuration of the UE is either the first antenna configuration or the second configuration, and the first determining module 1201 is further configured to:
obtain a first RSRP threshold or a second RSRP threshold configured by a network device, in which both the first and second RSRP thresholds are RSRP thresholds that match the UE with the second antenna configuration, the first RSRP threshold is configured by the network device for the UE with the first antenna configuration, and the second RSRP threshold is configured by the network device for the UE with the second antenna configuration.

Optionally, in an embodiment of the present disclosure, the second determining module 1202 is further configured to:
in response to the antenna configuration of the UE being the first antenna configuration, directly determine the first RSRP threshold configured by the network device as the parameter threshold of the UE; and
in response to the antenna configuration of the UE being the second antenna configuration, directly determine the second RSRP threshold configured by the network device as the parameter threshold of the UE.

Optionally, in an embodiment of the present disclosure, the processing module 1203 is further configured to:
in response to the antenna configuration of the UE being the second antenna configuration, initiate retransmission in case that the first measurement value corresponding to the reference signal of the UE is less than the parameter threshold of the UE.

Optionally, in an embodiment of the present disclosure, the processing module 1203 is further configured to:
in response to the antenna configuration of the UE being the first antenna configuration, determine a measurement offset value;
determine a second measurement value based on the first measurement value corresponding to the reference signal of the UE and the measurement offset value; and
initiate retransmission in case that the second measurement value is less than the parameter threshold of the UE.

Optionally, in an embodiment of the present disclosure, determining the measurement offset value includes at least one of:
determining the measurement offset value based on a protocol agreement; or
obtaining the measurement offset value configured by a network device.

Fig. 13 is a block diagram of a threshold determination apparatus provided in an embodiment of the present disclosure. As shown in Fig. 13, the apparatus may include a configuring module 1301.

The configuring module 1301 is configured to configure a numerical value corresponding to a respective UE with different antenna configurations, in which the numerical value is used to determine a parameter threshold of the UE.

In summary, in the threshold determination apparatus provided in an embodiment of the present disclosure, the network device can configure corresponding values for each UE with different antenna configurations, which are used to determine the parameter threshold corresponding to the UE. In one embodiment of the present disclosure, different parameter thresholds can be determined for UEs with different antenna configurations based on the above values, and the parameter thresholds are matched with the measurement accuracy and/or measurement error corresponding to the UE with different antenna configurations, thereby avoiding the situation where a UE with a large measurement error should perform a certain operation (such as initiating retransmission), but based on the configured parameter threshold, it is determined that the UE does not need to perform the operation (i.e. does not need to initiate retransmission), ensuring the signal coverage performance of the UE. Furthermore, in another embodiment of the present disclosure, UEs with different antenna configurations can determine the same parameter threshold based on the above values. However, when performing corresponding operations based on the relationship between the measurement values corresponding to the reference signal and the parameter threshold, different operations will be performed based on the measurement accuracy and/or measurement error corresponding to the antenna configuration of the UE. This can also avoid the situation where a UE with a large measurement error should have performed a certain operation (such as initiating retransmission), but based on the configured parameter threshold, it is determined that the UE does not need to perform the operation (i.e., does not need to initiate retransmission), and ensure the signal coverage performance of the UE.

Optionally, in an embodiment of the present disclosure, the parameter threshold includes an RSRP threshold.

Optionally, in an embodiment of the present disclosure, an operating frequency range supported by the UE is FR1; an antenna configuration of the UE is either a first antenna configuration or a second antenna configuration; in which, a number of antennas corresponding to the first antenna configuration is less than a number of antennas corresponding to the second antenna configuration.

Optionally, in an embodiment of the present disclosure, an operating frequency range supported by the UE is FR2; an antenna configuration of the UE is either a first antenna configuration or a second antenna configuration; in which, a number of antenna elements corresponding to the first antenna configuration is less than a number of antenna elements corresponding to the second antenna configuration.

Optionally, in an embodiment of the present disclosure, the configuring module 1301 is further configured to:
configure a first RSRP threshold for the UE with the antenna configuration being the first antenna configuration;
configure a second RSRP threshold for the UE with the antenna configuration being the second antenna configuration;
in which the first RSRP threshold configured for the UE with the first antenna configuration is different from the second RSRP threshold configured for the UE with the second antenna configuration.

Optionally, in an embodiment of the present disclosure, the configuring module 1301 is further configured to:
configure a second RSRP threshold for the UE with the second antenna configuration;
configure a first RSRP threshold and a threshold offset value for the UE with the first antenna configuration;
in which the first RSRP threshold configured for the UE with the first antenna configuration is equal to the second RSRP threshold configured for the UE with the second antenna configuration, and both the first RSRP threshold and the second RSRP thresholds are RSRP thresholds that match the UE with the second antenna configuration.

Optionally, in an embodiment of the present disclosure, the configuring module 1301 is further configured to:
configure a second RSRP threshold for the UE with the antenna configuration being the second antenna configuration; and
configure a first RSRP threshold for the UE with the antenna configuration being the first antenna configuration;
in which the first RSRP threshold configured for the UE with the first antenna configuration is equal to the second RSRP threshold configured for the UE with the second antenna configuration, and both the first RSRP threshold and the second RSRP threshold are RSRP thresholds that match the UE with the second antenna configuration.

Optionally, in an embodiment of the present disclosure, the apparatus is further configured to:
configure a measurement offset value for the UE with the antenna configuration being the first antenna configuration.

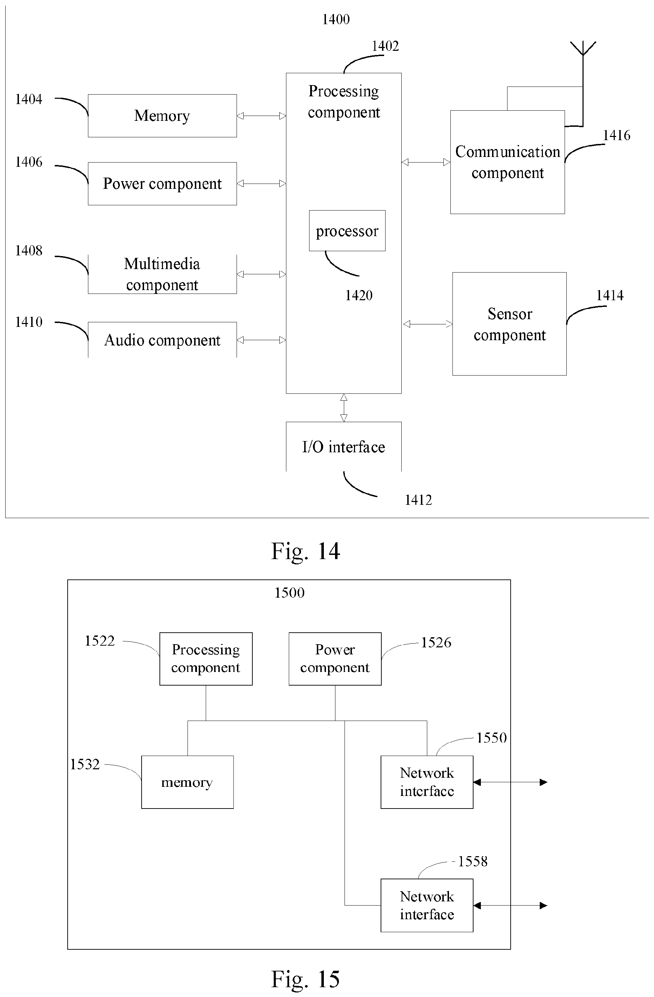

Fig. 14 is a schematic block diagram of a user equipment (UE) 1400 provided in an embodiment of the present disclosure. For example, the UE 1400 may be a mobile phone, computer, digital broadcasting terminal, messaging device, game console, tablet device, medical device, fitness device, personal digital assistant, etc.

Referring to Fig. 14, the UE 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the UE 1400, such as the operations associated with display, telephone calls, data communications, camera operations, and recording operations. The processing component 1402 may include one or more processors 1420 to execute instructions. Moreover, the processing component 1402 may include one or more modules which facilitate the interaction between the processing component 1402 and other components. For instance, the processing component 1402 may include a multimedia module to facilitate the interaction between the multimedia component 1008 and the processing component 1402.

The memory 1404 is configured to store various types of data to support the operation of the UE 1400. Examples of such data include instructions for any applications or methods operated on the UE 1400, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the UE 1400. The power component 1406 may include a power management system, one or more power sources, and any other components associated with the generation, management, and distribution of power in the UE 1400.

The multimedia component 1408 includes a screen providing an output interface between the UE 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. When the UE 1400 is in an operation mode, such as a shooting mode or a video mode, the front camera and/or the rear camera can receive external multimedia data. Each front camera and rear camera can be a fixed optical lens system or have focal length and optical zoom capabilities.

The audio component 1410 is configured to output and/or input audio signals. For example, the audio component 1410 includes a microphone ("MIC") configured to receive an external audio signal when the UE 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker for outputting audio signals.

The I/O interface 1412 provides an interface between the processing component 1402 and peripheral interface modules, such as a keyboard, a click wheel, buttons, and the like. The buttons may include but are not limited to: home button, volume button, start button, and lock button.

The sensor component 1414 includes one or more sensors to provide status assessments of various aspects of the UE 1400. For instance, the sensor component 1414 may detect an open/closed status of the UE 1400, relative positioning of components, e.g., the display and the keypad, of the UE 1400, a change in position of the UE 1400 or a component of the UE 1400, a presence or absence of a target object contact with the UE 1400, an orientation or an acceleration/deceleration of the UE 1400, and a change in temperature of the UE 1400. The sensor component 1414 may include a proximity sensor configured to detect the presence of nearby objects without any physical contact. The sensor component 1414 may also include a light sensor, such as a CMOS or CCD image sensor, applicable for imaging applications. In some embodiments, the sensor component 1414 may also include an acceleration sensor, a gyroscope sensor, a magnetic sensor, a pressure sensor or a temperature sensor.

The communication component 2218 is configured to facilitate communication, wired or wirelessly, between the UE 1400 and other devices. The UE 1400 can access a wireless network based on a communication standard, such as WiFi, 2G, or 3G, or a combination thereof. In one exemplary embodiment, the communication component 2218 receives a broadcast signal or broadcast associated information from an external broadcast management system via a broadcast channel. In one exemplary embodiment, the communication component 2218 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the UE 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

Fig. 15 is a block diagram of a network device 1500 provided in an embodiment of the present disclosure. For example, the network device 1500 can be provided as a network side device. Referring to Fig. 15, the network device 1500 includes a processing component 1511, which further includes at least one processor and memory resources represented by memory 1532, for storing instructions that can be executed by the processing component 1522, such as application programs. The application program stored in memory 1532 may include one or more modules each corresponding to a set of instructions. In addition, the processing component 1515 is configured to execute instructions to perform any of the methods previously applied to the network device, such as the method shown in Fig. 1.

The network side device 1500 may also include a power component 1526 configured to perform power management for the network side device 1500, a wired or wireless network interface 1550 configured to connect the network side device 1500 to the network, and an input/output (I/O) interface 1558. The network side device 1500 can operate an operating system based on the memory 1532, such as Windows Server TM, Mac OS XTM, Unix TM, Linux TM, Free BSDTM, or similar.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures, software modules, or a combination of hardware structures and software modules to implement the aforementioned functions. One of the above functions can be executed in the form of hardware structure, software module, or a combination of hardware structure and software module.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures, software modules, or a combination of hardware structures and software modules to implement the aforementioned functions. One of the above functions can be executed in the form of hardware structure, software module, or a combination of hardware structure and software module.

An embodiment of the present disclosure provides a communication device. The communication device may include a transceiver module and a processing module. The transceiver module may include a sending module and/or a receiving module. The sending module is used to implement the sending function, and the receiving module is used to implement the receiving function. The transceiver module can implement the sending function and/or the receiving function.

The communication device may be a terminal device (such as the terminal device in the aforementioned method embodiments), a device in the terminal device, or a device that can be matched and used with the terminal device. Alternatively, the communication device may be a network device, a device within a network device, or a device that can be used in conjunction with the network device.

An embodiment of the present disclosure provides another communication device. The communication device may be a network device, a terminal device (such as the terminal device in the aforementioned method embodiments), a chip, chip system, or processor that supports network devices to implement the above method, or a chip, chip system, or processor that supports terminal devices to implement the above method. This device can be used to implement the methods described in the above method embodiments, which can be referred to in the description of the above method embodiments.

The communication device may include one or more processors. The processor may be a general-purpose processor or a dedicated processor, etc. For example, it may be a baseband processor or a central processing unit. The baseband processor can be used to process communication protocols and communication data, while the central processor can be used to control communication devices (such as network side devices, baseband chips, terminal devices, terminal device chips, DU or CU, etc.), execute computer programs, and process data from computer programs.

Optionally, the communication device may also include one or more memories, on which computer programs may be stored. The processor executes the computer programs to enable the communication device to perform the methods described in the above method embodiments. Optionally, the memory may also store data. The communication device and memory can be set separately or integrated together.

Optionally, the communication device may also include a transceiver and an antenna. The transceiver can be referred to as a transceiver unit, transceiver machine, or transceiver circuit, etc., used to achieve transceiver functions. The transceiver can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device may also include one or more interface circuits. The interface circuit is used to receive code instructions and transmit them to the processor. The processor executes the code instructions to cause the communication device to perform the method described in the above method embodiments.

The communication device is a terminal device (such as the terminal device in the aforementioned method embodiments): the processor is used to execute any of the methods shown in Figures 1-6.

The communication device is a network device: the transceiver is used to perform any of the methods shown in Figures 7-11.

**In** one implementation, the processor may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor may store a computer program that runs on the processor and enables the communication device to perform the method described in the above method embodiments. The computer program may be fixed in the processor, in which case the processor may be implemented by hardware.

In one implementation, the communication device may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a terminal device (such as the terminal device in the aforementioned method embodiments), but the scope of the communication device described in this disclosure is not limited to this, and the structure of the communication device may not be limited. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, the chip includes processors and interfaces. The number of processors can be one or more, and the number of interfaces can be multiple.

Optionally, the chip also includes a memory for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

An embodiment of the present disclosure also provides a system for determining the duration of a side link, which includes a communication device as a terminal device (such as the first terminal device in the aforementioned method embodiment) and a communication device as a network device in the aforementioned embodiment, or the system includes a communication device as a terminal device (such as the first terminal device in the aforementioned method embodiment) and a communication device as a network device in the aforementioned embodiment.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A threshold determination method, performed by a user equipment (UE), comprising:
determining a numerical value corresponding to the UE;
determining a parameter threshold of the UE based on the numerical value; and
performing a corresponding operation based on a size relationship between a first measurement value corresponding to a reference signal and the parameter threshold.

2. The method of claim 1, wherein the parameter threshold comprises a reference signal receiving power (RSRP) threshold.

3. The method of claim 2, wherein an operating frequency range supported by the UE is FR1; an antenna configuration of the UE is either a first antenna configuration or a second antenna configuration; wherein, a number of antennas corresponding to the first antenna configuration is less than a number of antennas corresponding to the second antenna configuration.

4. The method of claim 2, wherein an operating frequency range supported by the UE is FR2; an antenna configuration of the UE is either a first antenna configuration or a second antenna configuration; wherein, a number of antenna elements corresponding to the first antenna configuration is less than a number of antenna elements corresponding to the second antenna configuration.

5. The method of claim 3 or 4, wherein the antenna configuration of the UE is either the first antenna configuration or the second antenna configuration;
determining the numerical value corresponding to the UE comprises:
obtaining a first RSRP threshold or a second RSRP threshold configured by a network device, wherein the first RSRP threshold is different from the second RSRP threshold, the first RSRP threshold is configured by the network device for the UE with the first antenna configuration, and the second RSRP threshold is configured by the network device for the UE with the second antenna configuration.

6. The method of claim 5, wherein determining the parameter threshold of the UE based on the numerical value comprises:
in response to the antenna configuration of the UE being the first antenna configuration, directly determining the first RSRP threshold configured by the network device as the parameter threshold of the UE; and
in response to the antenna configuration of the UE being the second antenna configuration, directly determining the second RSRP threshold configured by the network device as the parameter threshold of the UE.

7. The method of claim 3 or 4, wherein the antenna configuration of the UE is the second antenna configuration;
determining the numerical value corresponding to the UE comprises:
obtaining a second RSRP threshold configured by the network device, wherein the second RSRP threshold is an RSRP threshold that matches the UE with the second antenna configuration.

8. The method of claim 7, wherein determining the parameter threshold of the UE based on the numerical value comprises:
directly determining the second RSRP threshold configured by the network device as the parameter threshold of the UE.

9. The method of claim 3 or 4, wherein the antenna configuration of the UE is the first antenna configuration;
determining the numerical value corresponding to the UE comprises:
obtaining a threshold offset value and a first RSRP threshold configured by a network device, wherein the first RSRP threshold is an RSRP threshold that matches the UE with the second antenna configuration.

10. The method of claim 3 or 4, wherein the antenna configuration of the UE is the first antenna configuration;
determining the numerical value corresponding to the UE comprises:
obtaining a first RSRP threshold configured by the network device, wherein the first RSRP threshold is an RSRP threshold that matches the UE with the second antenna configuration; and
determining a threshold offset value based on a protocol agreement.

11. The method of claim 9 or 10, wherein determining the parameter threshold of the UE based on the numerical value comprises:
determining a third RSRP threshold based on the first RSRP threshold and the threshold offset value; and
determining the third RSRP threshold as the parameter threshold of the UE.

12. The method of any of claims 1-11, wherein performing the corresponding operation based on the size relationship between the first measurement value corresponding to the reference signal and the parameter threshold comprises:
initiating retransmission in case that the first measurement value corresponding to the reference signal of the UE is less than the parameter threshold of the UE.

13. The method of claim 3 or 4, wherein the antenna configuration of the UE is either the first antenna configuration or the second configuration, and determining the numerical value corresponding to the UE comprises:
obtaining a first RSRP threshold or a second RSRP threshold configured by a network device, wherein both the first and second RSRP thresholds are RSRP thresholds that match the UE with the second antenna configuration, the first RSRP threshold is configured by the network device for the UE with the first antenna configuration, and the second RSRP threshold is configured by the network device for the UE with the second antenna configuration.

14. The method of claim 13, wherein determining the parameter threshold of the UE based on the numerical value comprises:
in response to the antenna configuration of the UE being the first antenna configuration, directly determining the first RSRP threshold configured by the network device as the parameter threshold of the UE; and
in response to the antenna configuration of the UE being the second antenna configuration, directly determining the second RSRP threshold configured by the network device as the parameter threshold of the UE.

15. The method of claim 14, wherein performing the corresponding operation based on the size relationship between the first measurement value corresponding to the reference signal and the parameter threshold comprises:
in response to the antenna configuration of the UE being the second antenna configuration, initiating retransmission in case that the first measurement value corresponding to the reference signal of the UE is less than the parameter threshold of the UE.

16. The method of claim 14, wherein performing the corresponding operation based on the size relationship between the first measurement value corresponding to the reference signal and the parameter threshold comprises:
in response to the antenna configuration of the UE being the first antenna configuration, determining a measurement offset value;
determining a second measurement value based on the first measurement value corresponding to the reference signal of the UE and the measurement offset value; and
initiating retransmission in case that the second measurement value is less than the parameter threshold of the UE.

17. The method of claim 16, wherein determining the measurement offset value comprises at least one of:
determining the measurement offset value based on a protocol agreement; or
obtaining the measurement offset value configured by the network device.

18. A threshold determination method, performed by a network device, comprising:
configuring a numerical value corresponding to each UE with a distinct antenna configuration, wherein the numerical value corresponding to a UE is used to determine a parameter threshold of the UE.

19. The method of claim 18, wherein the parameter threshold comprises a reference signal receiving power (RSRP) threshold.

20. The method of claim 19, wherein an operating frequency range supported by the UE is FR1; an antenna configuration of the UE is either a first antenna configuration or a second antenna configuration; wherein, a number of antennas corresponding to the first antenna configuration is less than a number of antennas corresponding to the second antenna configuration.

21. The method of claim 19, wherein an operating frequency range supported by the UE is FR2; an antenna configuration of the UE is either a first antenna configuration or a second antenna configuration; wherein, a number of antenna elements corresponding to the first antenna configuration is less than a number of antenna elements corresponding to the second antenna configuration.

22. The method of claim 20 or 21, wherein configuring the numerical value corresponding to each UE with the distinct antenna configuration comprises:
configuring a first RSRP threshold for the UE with the antenna configuration being the first antenna configuration;
configuring a second RSRP threshold for the UE with the antenna configuration being the second antenna configuration;
wherein the first RSRP threshold configured for the UE with the first antenna configuration is different from the second RSRP threshold configured for the UE with the second antenna configuration.

23. The method of claim 20 or 21, wherein configuring the numerical value corresponding to each UE with the distinct antenna configuration comprises:
configuring a second RSRP threshold for the UE with the antenna configuration being the second antenna configuration;
configuring a first RSRP threshold and a threshold offset value for the UE the antenna configuration being with the first antenna configuration;
wherein the first RSRP threshold configured for the UE with the first antenna configuration is equal to the second RSRP threshold configured for the UE with the second antenna configuration, and both the first RSRP threshold and the second RSRP thresholds are RSRP thresholds that match the UE with the second antenna configuration.

24. The method of claim 20 or 21, wherein configuring the numerical value corresponding to each UE with the distinct antenna configuration comprises:
configuring a second RSRP threshold for the UE with the antenna configuration being the second antenna configuration; and
configuring a first RSRP threshold for the UE with the antenna configuration being the first antenna configuration;
wherein the first RSRP threshold configured for the UE with the first antenna configuration is equal to the second RSRP threshold configured for the UE with the second antenna configuration, and both the first RSRP threshold and the second RSRP threshold are RSRP thresholds that match the UE with the second antenna configuration.

25. The method of claim 24, further comprising:
configuring a measurement offset value for the UE with the antenna configuration being the first antenna configuration.

26. A threshold determination apparatus, comprising:
a first determining module, configured to determine a numerical value corresponding to a UE;
a second determining module, configured to determine a parameter threshold of the UE based on the numerical value; and
a processing module, configured to perform a corresponding operation based on a size relationship between a first measurement value corresponding to a reference signal and the parameter threshold.

27. A threshold determination apparatus, comprising:
a configuring module, configured to configure a numerical value corresponding to each UE with a distinct antenna configuration, wherein the numerical value is used to determine a parameter threshold of the UE.

28. A communication device, comprising a processor and a memory, wherein the memory is stored with a computer program, and the processor is configured to execute the computer program stored in the memory, so as to cause the device to implement the method of any of claims 1-17.

29. A communication device, comprising a processor and a memory, wherein the memory is stored with a computer program, and the processor is configured to execute the computer program stored in the memory, so as to cause the device to implement the method of any of claims 18-25.

30. A communication device, comprising a processor and an interface circuit, wherein
the interface circuit is configured to receive code instructions and transmit the code instructions to the processor;
the processor is configured to run the code instructions to implement the method of any of claims 1-17.

31. A communication device, comprising a processor and an interface circuit, wherein
the interface circuit is configured to receive code instructions and transmit the code instructions to the processor;
the processor is configured to run the code instructions to implement the method of any of claims 18-25.

32. A computer readable storage medium, configured to store instructions, wherein when the instructions are executed, the method of any of claims 1-17 is implemented.

33. A computer readable storage medium, configured to store instructions, wherein when the instructions are executed, the method of any of claims 18-25 is implemented.
